# EUROPÄISCHE PATENTSCHRIFT

(11) **EP 2 311 932 B1**
(45) Veröffentlichungstag und Bekanntmachung des Hinweises auf die Patenterteilung: **16.01.2013**
(21) Anmeldenummer: 10013538.3
(22) Anmeldetag: 12.10.2010
(51) Int. Cl.: C12C 1/12, C12C 1/027

(54) **Vorrichtung mit Drehhorde zur Verarbeitung keimfähiger Körnerfrüchte**
Device with rotary kiln for processing germinating cereals
Dispositif doté d'un four rotatif pour le traitement de grains germinatifs

(30) Priorität: 14.10.2009 DE 202009013842 U
(43) Veröffentlichungstag der Anmeldung: 20.04.2011
(73) Patentinhaber: Rauscher Engineering GmbH & Co. KG, 91463 Dietersheim (DE)
(72) Erfinder: Rauscher, Florian, 91463 Dietersheim (DE)
(74) Vertreter: Mielke, Klaus

(56) Entgegenhaltungen:
- EP-A2- 0 714 979
- DE-A1- 2 101 848
- DE-A1- 2 247 619
- DE-C1- 3 407 685

## Beschreibung

Die Erfinµdung betrifft eine Vorrichtung mit zumindest einer Drehhorde zur Verarbeitung keimfähiger Körnerfürchte, insbesondere von Getreide. Dabei ist die zumindest eine Drehhorde in einem zylinderförmigen Behälter zumindest am äußeren Rand über eine äußere Lagereinheit mit einem ringförmigen Laufstahl und einer Vielzahl von Laufrollen drehbar gelagert.

Vorrichtungen der erfindungsgemäßen Art können zur Vergrößerung der Verarbeitungskapazität in der Praxis auch mehrere Drehhorden aufweisen, die entweder in einem gemeinsamen Behälterturm übereinander angeordnet oder in separaten Behältereinheiten nebeneinander platziert sind. Je nach Anwendung kann eine solche Vorrichtung z.B. als eine Keimdarreinheit zur Verarbeitung von Gerstenkörnern in einer Mälzerei eingesetzt werden, und wird dann z.B. als eine "pneumatische Trommelmälzerei" bezeichnet. Bei anderen Anwendungen kann eine solche Vorrichtung auch ausschließlich als eine Keim- oder eine Darreinheit zur Behandlung unterschiedlichster Körnerfürchte eingesetzt werden, wie z.B. Weizen, Gerste, Reis, Hirse, Mais u.v.m.

Vorrichtungen der vorliegenden Art können in der Praxis erhebliche Abrnessungen und Gewichte aufweisen. So kann ein Behälter zur Aufnahme einer Drehhorde einen Durchmesser von z.B. 30 Metern, eine Drehhorde ein Eigengewicht von z.B. 150 Tonnen aufweisen. Zudem kann die auf eine Drehhorde aufgefüllt Körnerlage, auch Malzbett genannt, ein Gewicht von z.B. 500 Tonnen annehmen, besonders wenn dieses im feuchten Zustand in Form von Weichgut oder Grünmalz stark mit Wasser getränkt, gequollen bzw. gekeimt ist.

Bei solchen Bedingungen ist insbesondere die äußere Lagereinheit einer Drehhorde besonderen Belastungen ausgesetzt. Dabei tritt nach einem längeren Betrieb das Problem auf, dass die äußere Lagereinheit zunehmend verschleißt, indem insbesondere der die gesamte Drehhorde am äußeren Rand unterstützende Laufstahl der Lagereinheit allmählich ausgewalzt wird. Hierdurch tritt nicht nur eine irreversible Beschädigung der Lauffläche des Laufstahls auf, was mittel- bzw. langfristig zu einem Ausfall der Anlage führt und aufwendige Reparaturen notwendig macht. Vielmehr können bereits im laufenden Betrieb durch den zunehmenden Dickenverlust des Laufstahls auf Grund der Auswalzung Beschädigungen weiterer Komponenten auftreten, wie z.B. den Haltemitteln des Laufstahls auf der Unterseite der Drehhorde.

Wird z.B. der Laufstahl an der Unterseite einer Drehhorde von Schrauben gehalten, welche über den gesamten Umfang des Laufstahls verteilt in Bohrungen in der Lauffläche eingesetzt sind, so können die Köpfe einzelner Schrauben auf Grund der zunehmenden Auswalzung allmählich so stark beschädigt werden, dass die gleichmäßige Halterung des Laufstahls auf der Unterseite der Drehhorde nicht mehr gewährleistet ist. Dies kann dazu führen, dass der Laufstahl in einzelnen Segmenten nicht mehr korrekt gehalten wird und insbesondere in den Bereichen zwischen benachbarten Laufrollen durchhängt. Hierdurch können erhebliche Beeinträchtigungen im Rundlauf während des Betriebes einer Drehhorde auftreten.

DE 2 247 619 beschreibt eine Antriebsanordnung für Drehhorden in hälzweien.

Der Erfindung liegt die Aufgabe zu Grunde, eine Vorrichtung der oben angegeben Art so anzupassen, dass ein Auswalzen des Laufstahls im laufenden Betrieb und die damit verbundenen Probleme möglichst vermieden werden.

Die Aufgabe wird gelöst mit der in Anspruch 1 angegebenen Vorrichtung.

Vorteilhafte weitere Ausführungen der Erfindung sind in den Unteransprüchen angegeben.

Die erfindungsgemäße Anpassung der Umfänge des Laufstahls an dessen äußeren und inneren Stirnseiten an die Umfänge der stützenden Laufrollen an deren äußeren und inneren Mantelschieben hat den besonderen Vorteil, dass während des Abrollens der Laufrollen auf dem Laufstahl kein Schlupf zwischen den aufeinander gepressten Oberflächen von Laufstahl und den Laufflächen der Laufrollen auftritt. Da diese Flächen somit nicht aufeinander scheuern, sondern ohne Querkräfte nahezu reibungsfrei aufeinander laufen, wird auch ein Auswalzen in dem bisherigen Ausmaß vermieden. Die Standzeit des Laufstahls in der äußeren Lagereinheit und damit die Betriebsdauern der erfindungsgemäßen Vorrichtung können mit Hilfe der Erfindung erheblich verlängert werden. Anlagenstillstände können werden auf Notfälle reduziert.

Eine beispielhafte Ausführung der Erfindung wird nachfolgend an Hand der kurz angeführten Figuren nachfolgend näher erläutert. Dabei zeigt
- Fig. 1: eine seitliche Schnittdarstellung durch eine beispielhafte Ausfüh- rung einer Vorrichtung gemäß der Erfindung, und
- Fig. 2: einen Detailausschnitt A aus dem Beispiel der Fig. 1 im Bereich der äußeren Lagereinheit und einer Laufrolleneinrichtung, und
- Fig. 3: einen Detailausschnitt AA aus dem Beispiel der Fig. 2 im Bereich der Laufflächen zwischen dem Laufstahl und der Laufrolle einer beispielhaften Laufrolleneinrichtung.

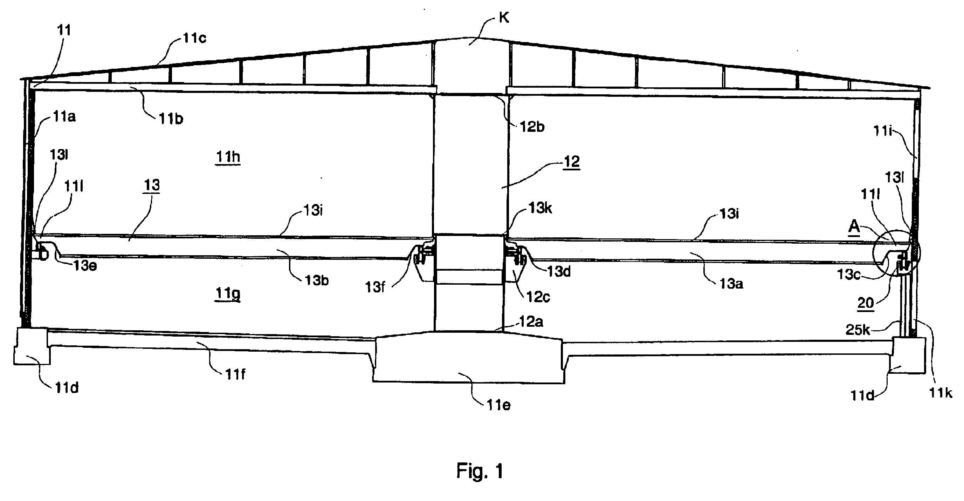

In Fig. 1 ist eine beispielhafte Ausführung einer Vorrichtung K gemäß der Erfindung in einer seitlichen Schnittdarstellung gezeigt. Die Vorrichtung ist beispielhaft als eine Keimdarreinheit K zur Herstellung von Darrmalz z.B. aus Gerste ausgeführt. Die Vorrichtung weist einen Behälter 11 mit einer zylinderförmigen, bevorzugt wärmeisolierten Behälterwand 11a auf, welcher mit einer wärmeisolierten Decke 11b und einem Dach 11c verschlossen ist. Dabei können die Behälterwand 11a aus Beton, bzw. Decke 11b und Dach 11c als eine Metallbaukonstruktion ausgeführt sein. Bei einer anderen Ausführung können Behälterwand, Decke und Dach auch komplett in einer Metallbaukonstruktion ausgeführt sein. Vorzugweise ruhen Decke 11b und Dach 11c auf dem Kopfende 12b einer Mittelsäule 12. Diese dient zugleich als ein Drehzentrum für eine Drehhorde 13. Bei dem Beispiel von Fig. 1 wird die Behälterwand 11a von einem Ringfundament 11d getragen. Die Mittelsäule 12 ruht mit dem Fußende 12a auf einem Zentralfundament 11e. Der ringförmige Bereich zwischen Ringfundament 11d und Zentralfundament 11e ist beispielweise über eine eingelegte Fundamentfüllung 11f verschlossen.

Im Beispiel der Fig. 1 ist die Drehhorde 13 im zylinderförmigen Behälter 11 sowohl an deren äußerem Rand 11l über eine äußere Lagereinheit 20 an der Innenwand 11a des Behälters 11, als auch im Bereich eines zentralen Durchbruchs 13k an der Mittelsäule 12 drehbar gelagert. Durch die Drehhorde 13 wird der Innenraum des Behälters 11 in einen unteren und oberen Hordenraum 11g bzw. 11h geteilt. Die im Beispiel der Fig. 1 gezeigte und als eine Keimdarreinheit dient Vorrichtung K verfügt im unteren Bereich der Behälterwand 11a über einen Zuluftkanal 11k zur Belüftung des als Druckraum und Zuluftbereich dienenden unteren Hordenraumes 11g. Im oberen Bereich der Behälterwand 11a ist ein Abluftkanal 11i zur Entlüftung des als Abluftbereich dienenden oberen Hordenraumes 11h vorhanden.

Bei einer Anlage gemäß der Ausführung von Fig. 1 dient die Drehhorde 13 bekanntlich als durchlüft- und bewässerbare Auflagefläche für eine Lage keimfähiger Körnerfürchte, auch Malzbett genannt. Zu Beginn von deren Verarbeitung können diese z.B. als Weichgut, bei einem fortgeschrittenen Bearbeitungszustand als Grünmalz und bei der Fertigstellung als Darrmalz bezeichnet werden. Aus Gründen der besseren Übersicht sind in den Figuren weder das Malzbett noch weitere Komponenten der Anlage dargestellt, wie z.B. ein Wender mit Spindeln.

Bei der in den Figuren dargestellten Ausführung besteht die Drehhorde 13 aus einer sternförmigen Anordnung von Hordenträgern. Diese sind mit einem Hordenboden 13i in Form eines Siebes belegt, welcher als durchlüftbare Auflagefläche für das Malzbett dient. In der seitlichen Schnittdarstellung von Fig. 1 sind zwei beispielhafte Hordenträger 13a bzw. 13b zu sehen, welche über äußere Auflageschultern 13c bzw. 13e drehbar auf der äußeren Lagereinheit 20 gelagert sind, und über innere Auflageschultern 13d bzw. 13f drehbar auf einem Konsolenring 12c um die Mittelsäule 12 gelagert sind. Die Oberseite des Hordenbodens 13i ist schließlich am ringförmigen äußeren Rand 11l mit einer lappenförmigen Hordenabdichtung 131 versehen, um eine Austreten von Flüssigkeit aus dem Malzbett in den unteren Hordenraum 11g zu vermeiden.

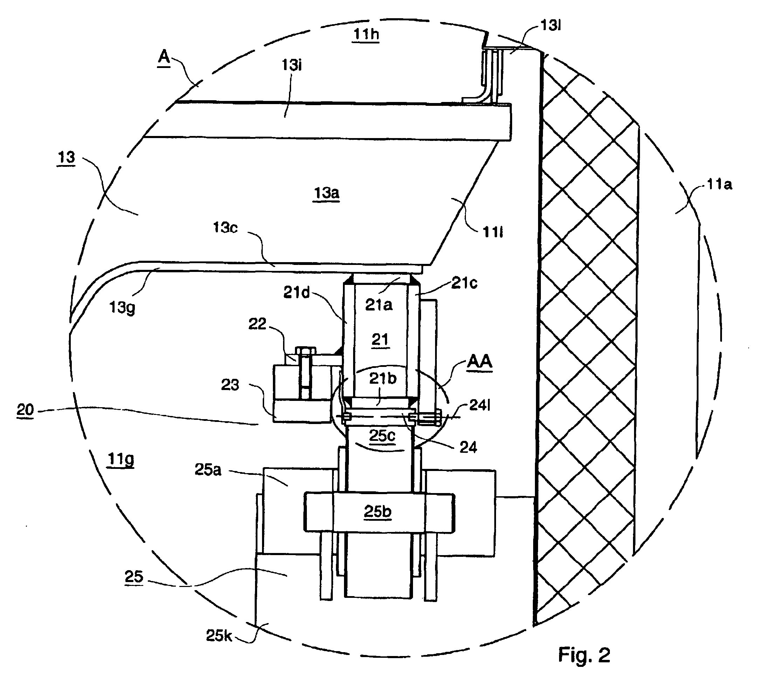

Fig. 2 zeigt einen Detailausschnitt A von Fig. 1 im Bereich der äußeren Auflageschulter 13c des Hordenträgers 13a. Dabei ist die Unterseite des Hordenträgers 13a mit einem Auflageelsen 13g verstärkt, welches auf der äußeren Lagereinheit 20 aufliegt. Dabei umfasst die Lagereinheit 20 die gesamte Innenseite 11a des Behälters 11 und dient zur drehbaren Lagerung der äußeren Auflageschultern aller Hordenträger der Drehhorde 13. Die Lagereinheit 20 weist dabei einen Laufring 21, einen Haltering 22 an der inneren Ringwand 21d des Laufrings 21 für einen Zahnkranz 23 zum Antrieb der Drehhorde, einen ringförmigen Laufstahl 24 an einer Unterseite des Laufrings 21 und eine Vielzahl darauf einwirkende Laufrolleneinrichtungen 25 auf.

Dabei weist die Ausführung des Laufrings 21 in Fig. 2 einen kastenförmigen Querschnitt auf, der aus ringscheibenförmigen Ober- und Untergurten 21a, 21b gebildet und durch äußere und innere vertikale Ringwände 21c, 21d in der Art von äußeren und inneren Mantelfächen geschlossen ist. Dabei ist die Unterseite des Hordenträgers 13a über das Auflageeisen 13g mit dem Obergurt 21a des Laufrings 21 verbunden, während auf dem Untergurt 21b der ringförmige Laufstahl 24 aufliegt. Die mit der Unterseite der Drehhorde 13 verbundenen Komponenten Laufring 21, Haltering 22, Zahnkranz 23 und Laufstahl 24 laufen auf einer Vielzahl von stationären Laufrolleneinrichtungen 25. Diese sind bevorzugt auf dem Ringfundament 11d an der Innenseite der Behälterwand 11a umlaufend verteilt platziert und im Kopfbereich mit zumindest einer Laufrolle zur Unterstützung des Laufstahls ausgestattet.

In Fig. 2 ist der Kopfbereich einer beispielhaften Laufrolleneinrichtung 25 im Schnitt gezeigt. Bei dieser ist am Kopfende eines Laufrollenständers 25k eine Laufrolle 25c über eine Rotationsachse 25b in einem Laufrollenbock 25a gelagert. Auf Laufrollen dieser Art liegt die gesamte Drehhorde 13 auf und wird über den ringförmigen Laufstahl 24 gedreht. Die Laufflächen des Laufstahls und der Laufrolleneinrichtung sind somit den oben beschriebenen Druckkräften und damit der Gefahr von Auswalzungen ausgesetzt.

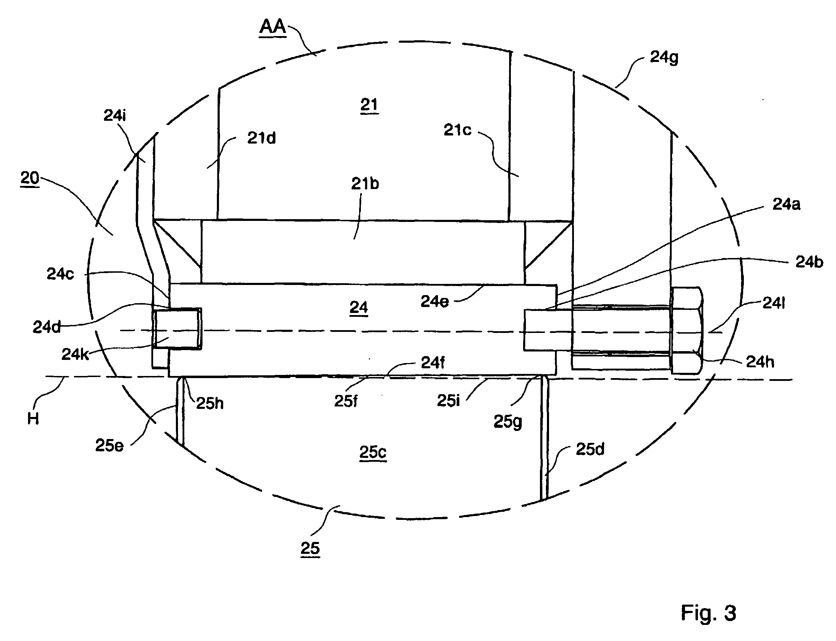

Fig. 3 zeigt einen Detailausschnitt AA von Fig. 2 unter der äußeren Auflageschulter 13c des beispielhaften Hordenträgers 13a mit den erfindungsgemäß ausgeführten Laufflächen des Laufstahls 24 und der Laufrolleneinrichtung 25.

Gemäß der Erfindung sind der ringförmige Laufstahl 24 und die Laufrollen 25c der äußeren Lagereinheit 20 so aneinander angepasst, dass das Verhältnis des Umfangs des Laufstahls 24 an dessen äußerer Stirnseite 24a zum Umfang 25g der Laufrolle 25c an deren äußerer Mantelscheibe 25d dem Verhältnis des Umfangs des Laufstahls 24 an dessen innerer Stirnseite 24c zum Umfang 25h der Laufrolle 25c an deren innerer Mantelscheibe 25e entspricht.

Bei einer besonders vorteilhaften, im Beispiel der Fig. 3 bereits dargestellten Ausführung der Erfindung weist der Laufstahl 24 eine Mittellinie 24l auf, welche zur äußeren Stirnseite 24a des Laufstahls 24 orthogonal und zum Drehzentrum 12 der Drehhorde 13 gerichtet ist. Erfindungsgemäß sind die Rotationsachse 25b der Laufrolle 25c und die Mittellinie 241 des Laufstahls 24 entlang einer vertikalen Ebene, welche z.B. den Darstellungen in den Figuren 1 bis 3 entspricht, parallel zueinander und annähernd horizontal angeordnet.

Bei der in den Figuren gezeigten beispielhaften Anordnung hat die erfindungsgemäße Anpassung der Umfänge eine keilringförmige Überhöhung 25i der Lauffläche 25f der Laufrolle 25c im Bereich von deren äußerer Mantelscheibe 25d, und eine entsprechende keilringförmige Einsenkung der Lauffläche 24f des Laufstahls 24 an dessen äußerer Stirnseite 24a zur Folge. Dies ist im Detailausschnitt AA von Fig. 3 an der Abweichung der Schnittlinie der Laufflächen 24f, 25f gegenüber einer strichliert als Referenz eingezeichneten Horizontallinie H erkennbar.

Zur dauerhaften Fixierung des Laufstahls 24 über dessen obere Auflageseite 24e auf dem Untergurt des Laufrings 21 sind gemäß einer vorteilhaften, in den Figuren 2 und 3 bereits dargestellten weiteren Ausführung der Erfindung zusätzliche Haltemittel vorhanden.

Hierzu sind an den äußeren und inneren Stirnseiten 24a bzw. 24c des ringförmigen Laufstahls 24 Haltemittel angebracht, welche sich an den äußeren und inneren Ringwänden 21c bzw. 21d des Laufrings 21 abstützen.

Im Beispiel der Fig. 3 sind diese Haltemittel vorzugsweise ausgeführt in Form eines Halteklotzes 24g, der sich an der Mantelfläche der äußeren Ringwand 21c abstützt, und in Form eines Haltebleches 24i, welches sich an der Mantelfläche der inneren Ringwand 21d abstützt. Zur Befestigung dieser Haltemittel ist der ringförmige Laufstahl 24 an der äußeren Stirnseite 24a mit einer äußeren Haltenut 24b und an der einen inneren Stirnseite 24c mit einer inneren Haltenut 24d ausgestattet. Dabei greift in die äußere Haltenut 24b eine Halteschraube 24h für den Halteklotz 24g und in die innere Haltenut 24d ein Haltebolzen 24k für das Halteblech 24i ein.

Entsprechende Haltemittel sind über den gesamten Umfang der Drehhorde verteilt und in den Haltenuten 24b, 24d des Laufstahls 24 fixiert.

### Bezugszeichenliste

- K: Keimdarreinheit
- 11: zylinderförmiger Behälter
- 11a: Behälterwand
- 11b: Decke
- 11c: Dach
- 11d, 11e: Ring- und Zentralfundamente
- 11f: Fundamentfüllung
- 11g: unterer Hordenraum
- 11h: oberer Hordenraum
- 11i: Abluftkanal in Behälterwand
- 11k: Zuluftkanal in Behälterwand
- 11l: äußerer Rand
- 12: Mittelsäule
- 12a: Fußende
- 12b: Kopfende
- 12c: Konsolenring
- 13: Drehhorde
- 13a, 13b: zwei beispielhafte Hordenträger
- 13c, 13d: äußere, innere Auflageschulter des Hordenträgers 13a
- 13e, 13f: äußere, innere Auflageschulter des Hordenträgers 13b
- 13g: Auflageeisen auf Unterseite des Hordenträgers 13a
- 13i: Hordenboden
- 13k: zentraler Durchbruch für Mittelsäule 12
- 131: Hordenabdichtung
- A: Detailausschnitt äußere Auflageschulter 13c Hordenträger 13a
- AA: Detailausschnitt der Lauffläche der Laufrolleneinrichtung 15
- 20: äußere Lagereinheit für die Hordenträger
- 21: Laufring
- 21a: Obergurt
- 21b: Untergurt
- 21c, 21d: äußere, innere Ringwand mit äußeren, inneren Mantelfächen
- 22: Haltering an innerer Ringwand 21d
- 23: Zahnkranz
- 24: Laufstahl
- 24a, 24b: äußere Stirnseite, äußere Haltenut
- 24c, 24d: innere Stirnseite, innere Haltenut
- 24e: obere Auflageseite
- 24f: Lauffläche
- 24g, 24h: Halteklotz mit Halteschraube an äußerer Stirnseite
- 24i, 24k: Halteblech mit Haltebolzen an innerer Stirnseite
- 241: horizontale, radiale Mittellinie
- 25: eine Laufrolleneinrichtung
- 25a, 25b: Laufrollenbock, Rotationsachse
- 25c: Laufrolle
- 25d, 25e: äußere, innere Mantelscheibe
- 25f: Lauffläche
- 25g, 25h: Umfang an der äußeren, inneren Mantelscheibe
- 25i: keilringförmige Überhöhung der Lauffläche der Laufrolle
- 25k: Laufrollenständer
- H: Horizontallinie

## Patentansprüche

1. Vorrichtung (K) mit zumindest einer Drehhorde (13) zur Behandlung keimfähiger Körnerfürchte, insbesondere von Getreide, wobei
die mindestens eine Drehhorde (13) in einem zylinderförmigen Behälter (11) zumindest am äußeren Rand (11l) über eine äußere Lagereinheit (20) mit einem ringförmigen Laufstahl (24) und einer Vielzahl von Laufrollen (25c) drehbar gelagert ist,
**dadurch gekennzeichnet, dass**
der ringförmige Laufstahl (24) und die Laufrollen (25c) der äußeren Lagereinheit (20) so aneinander angepasst sind, dass
- das Verhältnis des Umfangs des Laufstahls (24) an dessen äußerer Stirnseite (24a) zum Umfang (25g) einer Laufrolle (25c) an deren äußerer Mantelscheibe (25d)
- dem Verhältnis des Umfangs des Laufstahls (24) an dessen innerer Stirnseite (24c) zum Umfang (25h) der Laufrolle (25c) an deren innerer Mantelscheibe (25e)
entspricht.

2. Vorrichtung nach Anspruch 1, wobei
der Laufstahl (24) eine Mittellinie (241) aufweist, welche zur äu-βeren Stirnseite (24a) des Laufstahls (24) orthogonal und zum Drehzentrum (12) der Drehhorde (13) gerichtet ist, und
die Rotationsachse (25b) einer Laufrolle (25c) und die Mittellinie (241) des Laufstahls (24) in einer vertikalen Ebene (Fig. 2) parallel zueinander und annähernd horizontal angeordnet sind.

3. Vorrichtung nach Anspruch 1 oder 2, mit
- einem Laufring (21), dessen Obergurt (21a) die Drehhorde (13) am äußeren Rand (11l) unterstützt und auf dessen Untergurt (21b) der ringförmige Laufstahl (24) aufgelegt ist, und
- an den äußeren und/oder inneren Stirnseiten (24a, 24c) des ringförmigen Laufstahls (24) Haltemittel (24g, 24h; 24i, 24k) angebracht sind, welche sich an den äußeren und/oder inneren Mantelflächen (21c, 21d) des Laufrings (21) abstützen.

## Claims

1. Apparatus (K) having at least one rotating floor (13) for processing germinable cereals, in particular grain, wherein
the at least one rotating floor (13) is mounted in a rotatable manner in a cylindrical container (11) at least at the outer periphery (11l) via an external bearing unit (20) having an annular wear strip (24) and a multiplicity of running rollers (25c),
**characterized in that**
the annular wear strip (24) and the running rollers (25c) of the external bearing unit (20) are matched to one another such that
- the ratio of the circumference of the wear strip (24) at the outer end face (24a) thereof to the circumference (25g) of a running roller (25c) at the outer lateral disc (25d) thereof corresponds
- to the ratio of the circumference of the wear strip (24) at the inner end face (24c) thereof to the circumference (25h) of the running roller (25c) at the inner lateral disc (25e) thereof.

2. Apparatus according to Claim 1, wherein
the wear strip (24) has a centre line (241) which is orthogonal to the outer end face (24a) of the wear strip (24) and is directed towards the centre of rotation (12) of the rotating floor (13), and
the rotational axis (25b) of a running roller (25c) and the centre line (241) of the wear strip (24) are arranged approximately horizontally and parallel to one another in a vertical plane (Figure 2).

3. Apparatus according to Claim 1 or 2, having
- a running ring (21), the upper flange (21a) of which supports the rotating floor (13) at the outer periphery (11l) and against the lower flange (21b) of which the annular wear strip (24) is placed, and
- retaining means (24g, 24h; 24i, 24k) are attached to the outer and/or inner end faces (24a, 24c) of the annular wear strip (24), said retaining means (24g, 24h; 24i, 24k) being supported on the outer and/or inner lateral surfaces (21c, 21d) of the wear strip (21).

## Revendications

1. Dispositif (K) doté d'au moins une claie rotative (13) pour le traitement de grains germinatifs, en particulier de céréales, dans lequel
ladite au moins une claie rotative (13) est montée de façon rotative dans un récipient cylindrique (11), au moins au bord extérieur (11l), au moyen d'une unité de palier extérieure (20) avec un chemin de roulement annulaire (24) et une pluralité de galets de roulement (25c),
**caractérisé en ce que**
le chemin de roulement annulaire (24) et les galets de roulement (25c) de l'unité de palier extérieure (20) sont adaptés les uns aux autres de telle manière que
- le rapport du périmètre du chemin de roulement (24) à son côté frontal extérieur (24a) au périmètre (25g) d'un galet de roulement (25c) à son flanc latéral extérieur (25d)
corresponde
- au rapport du périmètre du chemin de roulement (24) à son côté frontal extérieur (24c) au périmètre (25h) du galet de roulement (25c) à son flanc latéral intérieur (25e).

2. Dispositif selon la revendication 1, dans lequel
le chemin de roulement (24) présente une ligne centrale (241), qui est orientée orthogonalement à la face frontale extérieure (24a) du chemin de roulement (24) et au centre de rotation (12) de la claie rotative (13), et
l'axe de rotation (25b) d'un galet de roulement (25c) et la ligne centrale (241) du chemin de roulement (24) sont disposées dans un plan vertical (Fig. 2) parallèlement l'un à l'autre et approximativement horizontalement.

3. Dispositif selon la revendication 1 ou 2, avec
- un anneau de roulement (21), dont la bande supérieure (21a) supporte la claie rotative (13) au bord extérieur (111) et sur la bande inférieure (21b) duquel est posé le chemin de roulement annulaire (24), et
- des moyens de fixation (24g, 24h; 24i, 24k) sont placés sur les faces frontales extérieures et/ou intérieures (24a, 24c) du chemin de roulement annulaire (24), qui prennent appui sur les flancs latéraux extérieurs et/ou intérieurs (21c, 21d) de l'anneau de roulement (21).
